# EUROPEAN PATENT SPECIFICATION

(11) **EP 3 530 939 B1**
(45) Date of publication and mention of the grant of the patent: **07.04.2021**
(21) Application number: 19158327.7
(22) Date of filing: 20.02.2019
(51) Int. Cl.: F03D 80/70, F16C 33/78, F16C 43/04

(54) **REPLACEMENT METHODS FOR RADIAL SEALS OF WIND TURBINE MAIN BEARINGS**
ERSATZVERFAHREN FÜR RADIALDICHTUNGEN VON WINDTURBINENHAUPTLAGERN
PROCÉDÉ DE REMPLACEMENT DES JOINTS RADIAUX DES PALIERS PRINCIPAUX D'UNE ÉOLIENNE

(30) Priority: 21.02.2018 US 201815901078
(43) Date of publication of application: 28.08.2019
(73) Proprietor: General Electric Company, Schenectady, NY 12345 (US)
(72) Inventor: ABREU, Christopher Rene, Greenville, SC South Carolina 29615 (US)
(74) Representative: de Rooij, Mathieu Julien

(56) References cited:
- EP-A1- 1 927 795
- DE-A1-102011 011 163

## Description

The present subject matter relates generally to wind turbines, and more particularly to replacement methods for radial seals of a main bearing of a wind turbine.

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The nacelle includes a rotor assembly coupled to the gearbox and to the generator. The rotor assembly and the gearbox are mounted on a bedplate member support frame located within the nacelle. More specifically, in many wind turbines, the gearbox is mounted to the bedplate member via one or more torque supports or arms. The one or more rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The majority of commercially available wind turbines utilize multi-stage geared drivetrains to connect the turbine blades to electrical generators. The wind turns the rotor blades, which spin a low speed shaft that is commonly referred to as the main shaft. Rotation of the main shaft is provided by a main bearing. The main shaft is coupled to an input shaft of the gearbox, which has a higher speed output shaft connected to the generator. Thus, the geared drivetrain aims to increase the velocity of the mechanical motion.

Lubrication of the main bearing can be a challenge as reliable or constant lubrication is required during all operating conditions in order for the main bearing to remain operational. Radial contact seals are often used to maintain the lubricant in contact with the main bearing. However, such seals can wear grooves in mating components in long life continuous operation environments. The seal contact surfaces cannot be replaced without machine disassembly. In addition, when the seal wears out and a new seal is replaced in the same place, inadequate sealing occurs in the old groove causing lubricant leakage.

Thus, improved replacement methods for the radial seals of the wind turbine main bearing would be welcomed in the art. Document DE 102011011163 A1 shows an example of such a replacement method. More specifically, the present disclosure provides a method for relocating replacement seals to an unused portion of the main shaft.

Various aspects and advantages of the invention will be set forth in part in the following description, or may be clear from the description, or may be learned through practice of the invention.

In one aspect, the present disclosure is directed to a method for replacing an existing radial seal positioned around a shaft and adjacent to a bearing. The method includes providing at least one spacer in a seal cavity of the existing radial seal. The method also includes removing a cover of the existing radial seal. The method further includes removing the spacer(s). In addition, the method includes removing the existing radial seal from around the shaft. Moreover, the method includes replacing the existing radial seal with a new radial seal. Further, the method includes moving the spacer(s) from a first side of the seal cavity to an opposing, second side of the seal cavity to provide a new sealing location for the new radial seal. Thus, the method also includes securing the cover adjacent to the new radial seal.

In one embodiment, the method may include providing a plurality of spacers in the seal cavity of the existing radial seal. In such embodiments, the plurality of spacers may be stacked together in an axial direction of the shaft. In addition, the method may include moving one of the spacers from the first side of the seal cavity to the opposing side of the seal cavity and leaving remaining spacers of the plurality of spacers on the first side.

In another embodiment, the first side of the seal cavity may correspond to a rear side of the seal cavity, whereas the second side of the seal cavity may correspond to a front side of the seal cavity.

In further embodiments, the step of removing the cover of the existing radial seal may include removing one or more fasteners securing the cover in place and sliding the cover away from the existing radial seal.

In additional embodiments, the bearing may be a tapered roller bearing, a spherical roller bearing, or a cylindrical roller bearing. Further, the bearing may be a main bearing of a wind turbine and the shaft may be a main shaft of the wind turbine.

In another aspect, the present disclosure is directed to a drivetrain assembly for a wind turbine. The drivetrain assembly includes a shaft, a bearing having an inner race, an outer race, and a plurality of roller elements configured therebetween, an existing radial seal positioned around the shaft and adjacent to the bearing within a seal cavity, a seal cover positioned to secure the existing radial seal in place, and at least one spacer within the seal cavity adjacent to the existing radial seal to provide an existing sealing location. Further, the spacer(s) is movable from a first side of the seal cavity to an opposing side of the seal cavity to provide a new sealing location for a new radial seal when the existing radial seal is replaced. It should be understood that the drivetrain assembly may further include any of the additional features as described herein.

In yet another aspect, the present disclosure is directed to a method for replacing an existing radial seal positioned around a main shaft and adjacent to a main bearing of a wind turbine. The method includes providing a plurality of spacers in a seal cavity of the existing radial seal. The method also includes removing a cover of the existing radial seal and removing a first spacer of the plurality of spacers. In addition, the method includes removing the existing radial seal from around the main shaft. Further, the method includes replacing the existing radial seal with a new radial seal. Thus, the method includes repositioning the first spacer from a first side of the seal cavity to an opposing, second side of the seal cavity to provide a new sealing location for the new radial seal with remaining spacers of the plurality of spacers remaining on the first side. Moreover, the method includes securing the cover adjacent to the new radial seal.

It should be understood that the method may further include any of the additional steps and/or features as described herein. In addition, the method may include (a) removing a second spacer of the plurality of spacers, and (b) repositioning the second spacer from the first side of the seal cavity to the second side of the seal cavity adjacent to the first spacer to provide another new sealing location for another replacement radial seal with remaining spacers of the plurality of spacers remaining on the first side. In such embodiments, the method may also include repeating steps (a) and (b) each time a radial seal is replaced.

Various features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention.

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a perspective view of a simplified, internal view of one embodiment of a nacelle of a wind turbine according to the present disclosure, particularly illustrating a drivetrain assembly having a single main bearing unit;
FIG. 3 illustrates a cross-sectional view of one embodiment of certain drivetrain components of a wind turbine according to the present disclosure, particularly illustrating a drivetrain assembly having a main shaft and a main bearing mounted thereon;
FIG. 4 illustrates a detailed cross-sectional view of one embodiment of the main bearing according to the present disclosure, particularly illustrating a radial seal and a plurality of spacers arranged in a seal cavity; and,
FIG. 5 illustrates a flow diagram of one embodiment of method for replacing an existing radial seal positioned around a shaft and adjacent to a bearing according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention. For instance, features illustrated or described as part of one embodiment can be used with another embodiment to yield a still further embodiment. Thus, it is intended that the present invention covers such modifications and variations as come within the scope of the appended claims.

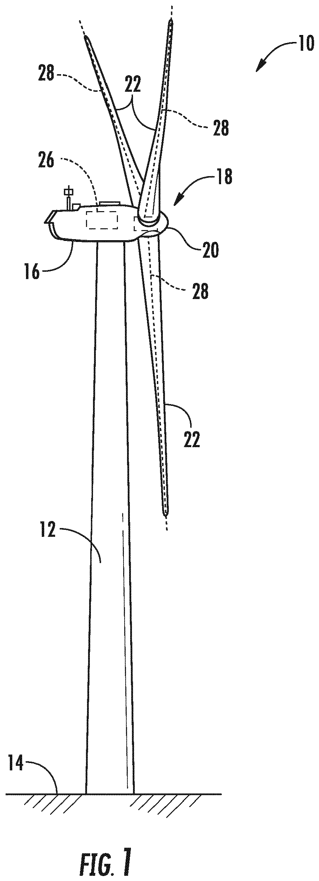

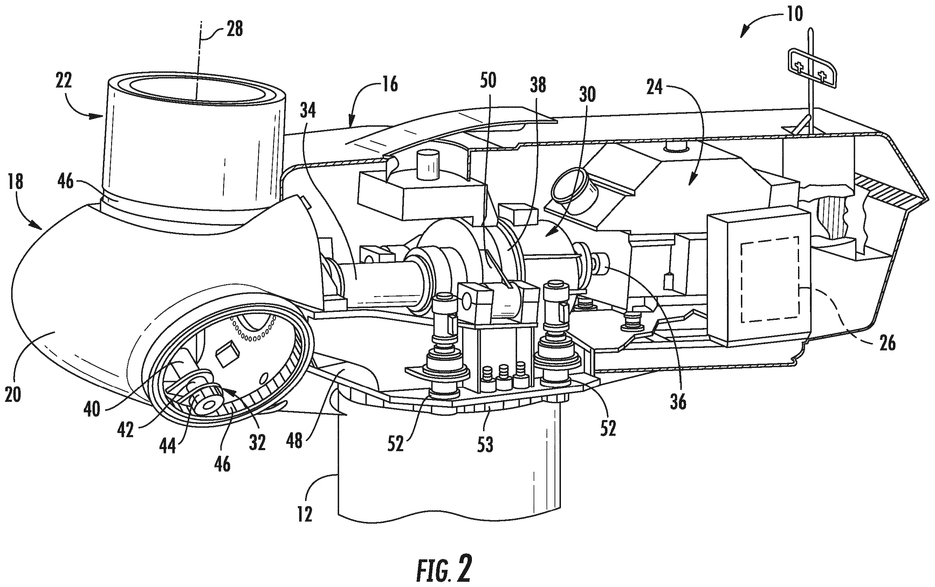

Referring now to the drawings, FIG. 1 illustrates a perspective view of one embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the components. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals.

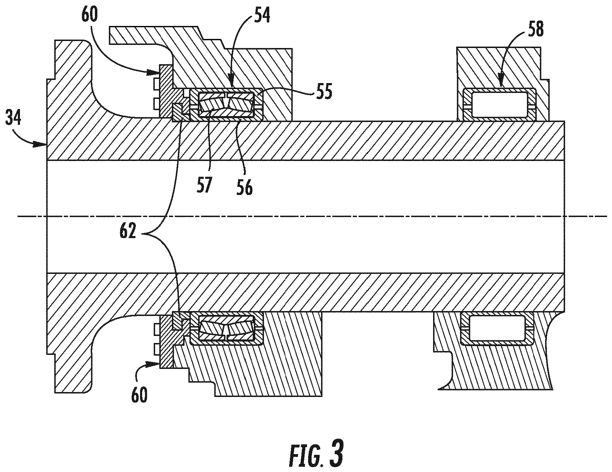

Referring now to FIGS. 2 and 3, various views of the drivetrain assembly of a wind turbine, such as the wind turbine 10 of FIG. 1, are illustrated. FIG. 2 illustrates a simplified, internal view of one embodiment of the nacelle 16 of the wind turbine 10 shown in FIG. 1, particularly illustrating certain drivetrain components of a drivetrain assembly having a single main bearing unit. FIG. 3 illustrates a cross-sectional view of one embodiment of several drivetrain components of a drivetrain assembly of the wind turbine 10 according to the present disclosure.

Referring particularly to FIG. 2, the generator 24 may be coupled to the rotor 18 for producing electrical power from the rotational energy generated by the rotor 18. Further, as shown in FIGS. 2 and 3, the rotor 18 may include a main shaft 34 rotatable via a main bearing 54 coupled to the hub 20 for rotation therewith. The main shaft 34 may, in turn, be rotatably coupled to a gearbox output shaft 36 of the generator 24 through a gearbox 30. More specifically, as shown in FIG. 3, the main shaft 34 is typically supported by one or more bearings 54, 58. For example, as shown, a upwind end of the shaft 34 may be supported by a first or main bearing 54 and a downwind end of the shaft 34 may be supported by a second bearing 58. More specifically, as shown, the main bearing 54 generally corresponds to a cylindrical roller bearing having an inner race 56, an outer race 55, and a plurality of roller elements 57 arranged therebetween. In further embodiments, the main bearing 54 may be any suitable bearing in addition to cylindrical roller bearings, including for example, a tapered rolling bearing, a spherical roller bearing, or any other suitable bearing.

In addition, as shown, the main bearing 54 may be secured in place via a bearing cover 60 that is mounted at the upwind end of the shaft 34, as well as an existing radial or annular seal 62 configured between the cover 60 and the main bearing 54. For example, in certain embodiments, the radial seal 62 may correspond to a labyrinth seal that prevents leakage of bearing fluids. Further, as shown, the bearings 54, 58 may be mounted to the bedplate member 48 of the nacelle 16 via one or more torque supports 50.

Referring back to FIG. 2, the gearbox 30 may include a gearbox housing 38 that is connected to the bedplate 48 by one or more torque arms 50. As is generally understood, the main shaft 34 provides a low speed, high torque input to the gearbox 30 in response to rotation of the rotor blades 22 and the hub 20. Thus, the gearbox 30 thus converts the low speed, high torque input to a high speed, low torque output to drive the gearbox output shaft 36 and, thus, the generator 24.

Each rotor blade 22 may also include a pitch adjustment mechanism 32 configured to rotate each rotor blade 22 about its pitch axis 28. Further, each pitch adjustment mechanism 32 may include a pitch drive motor 40 (e.g., any suitable electric, hydraulic, or pneumatic motor), a pitch drive gearbox 42, and a pitch drive pinion 44. In such embodiments, the pitch drive motor 40 may be coupled to the pitch drive gearbox 42 so that the pitch drive motor 40 imparts mechanical force to the pitch drive gearbox 42. Similarly, the pitch drive gearbox 42 may be coupled to the pitch drive pinion 44 for rotation therewith. The pitch drive pinion 44 may, in turn, be in rotational engagement with a pitch bearing 46 coupled between the hub 20 and a corresponding rotor blade 22 such that rotation of the pitch drive pinion 44 causes rotation of the pitch bearing 46. Thus, in such embodiments, rotation of the pitch drive motor 40 drives the pitch drive gearbox 42 and the pitch drive pinion 44, thereby rotating the pitch bearing 46 and the rotor blade 22 about the pitch axis 28. Similarly, the wind turbine 10 may include one or more yaw drive mechanisms 52 communicatively coupled to the controller 26, with each yaw drive mechanism(s) 52 being configured to change the angle of the nacelle 16 relative to the wind (e.g., by engaging a yaw bearing 53 of the wind turbine 10).

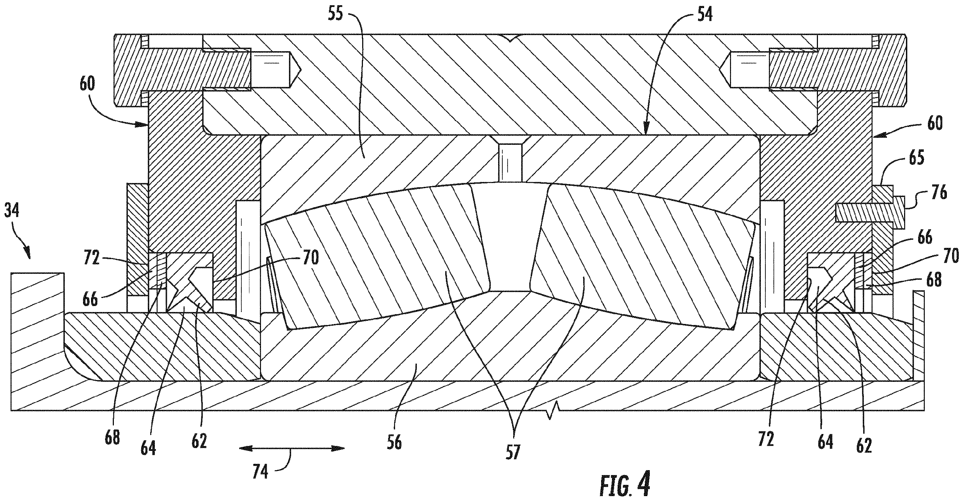

Referring now to FIG. 4, a detailed, cross-sectional view of the main bearing 54 of the wind turbine 10 is illustrated. As shown, the main bearing 54 is secured in place via the bearing cover 60. In addition, as shown, the radial seal 62 is positioned around the main shaft 34 between the cover 60 and the main bearing 54 within a seal cavity 64 and is secured in place via a seal cover 65. Further, as shown, a plurality of spacers 66, 68 are also positioned within the seal cavity 64 adjacent to the existing radial seal 62 to provide an existing sealing location. More specifically, as shown, the bearing assembly includes, at least, a first spacer 66 and a second spacer 68. In addition, as shown, the plurality of spacers 66, 68 may be stacked together in an axial direction of the main shaft 34, as represented by arrow 74. Thus, the spacer(s) 66, 68 are movable from a first side 70 of the seal cavity 64 to an opposing, second side 72 of the seal cavity 64 to provide a new sealing location for a new radial seal (not shown) when the existing radial seal 62 is replaced. In other words, upon seal replacement, one or more of the spacers 66, 68 are moved from one side of the seal 62 to the other to give the replacement seal a fresh sealing location. In one embodiment, as shown, the first side 70 of the seal cavity 64 corresponds to a rear side of the seal cavity 64, whereas the second side 72 of the seal cavity 64 corresponds to a front side of the seal cavity 64.

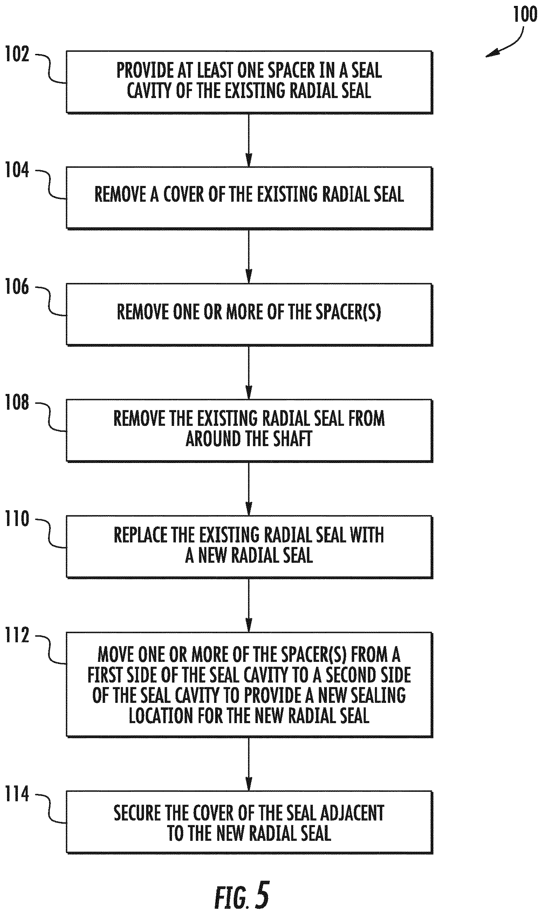

Referring now to FIG. 5, a flow diagram of one embodiment of a method 100 for replacing the existing radial seal 62 positioned around the main shaft 34 and adjacent to the main bearing 54 is illustrated. Though the bearing may include the main bearing 54 of the wind turbine 10 described herein, it should be understood that the method 100 may be applied to any radial seal used for rotating bearings and therefore needs replacement, including further wind turbine bearings and those bearings outside of wind turbine applications. As shown at 102, the method 100 includes providing one or more spacers 66, 68 in the seal cavity 64 of the existing radial seal 62. As shown at 104, the method 100 includes removing the cover 65 of the existing radial seal. For example, in one embodiment, the seal cover 65 may be removed by removing one or more fasteners 76 securing the cover 65 in place and sliding the cover 65 away from the existing radial seal 62 when the fasteners 76 are removed.

As shown at 106, the method 100 includes removing at least one of the spacers 66, 68. As shown at 108, the method 100 includes removing the existing radial seal 62 from around the shaft 34. As shown at 110, the method 100 includes replacing the existing radial seal 62 with a new radial seal. As shown at 112, the method 100 includes moving the spacer(s) 66, 68 from the first side 70 of the seal cavity 64 to an opposing, second side 72 of the seal cavity 64 to provide a new sealing location for the new radial seal 62. More specifically, in one embodiment, the method 100 may include moving the plurality of spacers 66, 68 one at a time (i.e. at each seal replacement procedure) from the first side 70 of the seal cavity 64 to the second side 72 of the seal cavity 64 and leaving a number of the spacers on the first side 70. In addition, the method 100 may include removing and repositioning any number of spacers from one side of the seal cavity 64 to the other each time a radial seal of the drivetrain assembly is replaced. After the new radial seal is positioned, as shown at 114, the method 100 includes securing the seal cover 65 adjacent to the new radial seal to secure it in place. This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method (100) for replacing an existing radial seal (62) positioned around a shaft (34) and adjacent to a bearing (54), the method (100) comprising:
providing a plurality of spacers (66, 68) in a seal cavity (64) of the existing radial seal (62);
removing a cover (65) of the existing radial seal (62);
removing at least one of the plurality of spacers (66, 68);
removing the existing radial seal (62) from around the shaft (34);
replacing the existing radial seal (62) with a new radial seal (62);
moving at least one of the plurality of the spacers (66, 68) from a first side (70) of the seal cavity (64) to an opposing, second side (72) of the seal cavity (64) to provide a new sealing location for the new radial seal (62) and leaving remaining spacers (66,68) of the plurality of spacers (66, 68) on the first side (70); and,
securing the cover (65) adjacent to the new radial seal (62).

2. The method (100) according to claim 1, wherein the first side (70) corresponds to a rear side of the seal cavity (64) and the second side (72) corresponds to a front side of the seal cavity (64).

3. The method (100) of any of the preceding claims, wherein removing the cover (65) of the existing radial seal (62) further comprises removing one or more fasteners securing the cover (65) in place and sliding the cover (65) away from the existing radial seal (62).

4. The method (100) of any of the preceding claims, wherein the bearing (54) comprises at least one of a tapered roller bearing, a spherical roller bearing, or a cylindrical roller bearing.

5. The method (100) of any of the preceding claims, wherein the bearing (54) comprises a main bearing (54) of a wind turbine (10) and the shaft (34) comprises a main shaft (34) of the wind turbine (10).

6. A drivetrain assembly for a wind turbine (10), comprising:
a shaft (34);
a bearing (54) comprising an inner race (56), an outer race (55), and a plurality of roller elements (57) configured therebetween;
an existing radial seal (62) positioned around the shaft (34) and adjacent to the bearing (54) within a seal cavity (64);
a cover (65) adjacent to the existing radial seal (62) that secures the existing radial seal (62) in place; and,
a plurality of spacers (66, 68) within the seal cavity (64) adjacent to the existing radial seal (62) to provide an existing sealing location,
wherein one or more spacers of the plurality of the spacers (66, 68) is movable from a first side (70) of the seal cavity (64) to an opposing side of the seal cavity (64) and remaining spacers (66,68) of the plurality of spacers remain on the first side (70) to provide a new sealing location for a new radial seal (62) when the existing radial seal (62) is replaced.

7. The drivetrain assembly of claim 6, wherein the plurality of spacers (66, 68) are stacked together in an axial direction of the shaft (34).

8. The drivetrain assembly of claims 6 or 7, wherein the first side (70) corresponds to a rear side of the seal cavity (64) and the second side (72) corresponds to a front side of the seal cavity (64).

9. The drivetrain assembly of claims 6, 7 or 8 wherein the cover (65) of the seal is secured in place via one or more removable fasteners, the cover (65) being removable and slidable along the shaft (34).

10. The drivetrain assembly of claims 6, 7, 8 or 9, wherein the bearing (54) comprises at least one of a tapered roller bearing, a spherical roller bearing, or a cylindrical roller bearing.

11. The drivetrain assembly of claims 6, 7, 8, 9 or 10, wherein the bearing (54) comprises a main bearing (54) of a wind turbine (10) and the shaft (34) comprises a main shaft (34) of the wind turbine (10).

## Patentansprüche

1. Verfahren (100) zum Ersetzen einer vorhandenen Radialdichtung (62), die um eine Welle (34) und benachbart zu einem Lager (54) angeordnet ist, wobei das Verfahren (100) umfasst:
Bereitstellen einer Vielzahl von Abstandshaltern (66, 68) in einem Dichtungshohlraum (64) der vorhandenen Radialdichtung (62);
Entfernen einer Abdeckung (65) der vorhandenen Radialdichtung (62);
Entfernen mindestens eines der Vielzahl von Abstandshaltern (66, 68);
Entfernen der vorhandenen Radialdichtung (62) um die Welle (34);
Ersetzen der vorhandenen Radialdichtung (62) durch eine neue Radialdichtung (62);
Bewegen mindestens eines der Vielzahl von Abstandshaltern (66, 68) von einer ersten Seite (70) des Dichtungshohlraums (64) zu einer gegenüberliegenden zweiten Seite (72) des Dichtungshohlraums (64), um eine neue Abdichtungsposition für die neue Radialdichtung (62) bereitzustellen, und Belassen verbleibender Abstandshalter (66, 68) der Vielzahl von Abstandshaltern (66, 68) auf der ersten Seite (70); und
Befestigen der Abdeckung (65) benachbart zur neuen Radialdichtung (62).

2. Verfahren (100) nach Anspruch 1, wobei die erste Seite (70) einer Rückseite des Dichtungshohlraums (64) und die zweite Seite (72) einer Vorderseite des Dichtungshohlraums (64) entsprechen.

3. Verfahren (100) nach einem der vorhergehenden Ansprüche, wobei das Entfernen der Abdeckung (65) der vorhandenen Radialdichtung (62) ferner das Entfernen eines oder mehrerer Befestigungselemente umfasst, die die Abdeckung (65) an Ort und Stelle befestigen, und Schieben Abdeckung (65) weg von der vorhandenen Radialdichtung (62).

4. Verfahren (100) nach einem der vorhergehenden Ansprüche, wobei das Lager (54) mindestens eines aus einem Kegelrollenlager, einem Pendelrollenlager oder einem Zylinderrollenlager umfasst.

5. Verfahren (100) nach einem der vorhergehenden Ansprüche, wobei das Lager (54) ein Hauptlager (54) einer Windturbine (10) umfasst und die Welle (34) eine Hauptwelle (34) der Windturbine (10) umfasst.

6. Antriebsstranganordnung für eine Windturbine (10), umfassend:
eine Welle (34);
ein Lager (54), umfassend einen Innenring (56), einen Außenring (55) und eine Vielzahl dazwischen konfigurierter Rollenelemente (57);
eine vorhandene Radialdichtung (62), die um die Welle (34) und benachbart zum Lager (54) innerhalb eines Dichtungshohlraums (64) positioniert ist;
eine Abdeckung (65) benachbart zur vorhandenen Radialdichtung (62), die die vorhandene Radialdichtung (62) an Ort und Stelle befestigt; und
eine Vielzahl von Abstandshaltern (66, 68) innerhalb des Dichtungshohlraums (64) benachbart zur vorhandenen Radialdichtung (62), um eine vorhandene Abdichtungsposition bereitzustellen,
wobei ein oder mehrere Abstandshalter der Vielzahl der Abstandshalter (66, 68) von einer ersten Seite (70) des Dichtungshohlraums (64) zu einer gegenüberliegenden Seite des Dichtungshohlraums (64) beweglich sind und verbleibende Abstandshalter (66, 68) der Vielzahl von Abstandshaltern auf der ersten Seite (70) verbleiben, um eine neue Abdichtungsposition für eine neue Radialdichtung (62) bereitzustellen, wenn die vorhandene Radialdichtung (62) ersetzt wird.

7. Antriebsstranganordnung nach Anspruch 6, wobei die Vielzahl von Abstandshaltern (66, 68) in einer axialen Richtung der Welle (34) zusammengestapelt sind.

8. Antriebsstranganordnung nach Anspruch 6 oder 7, wobei die erste Seite (70) einer Rückseite des Dichtungshohlraums (64) und die zweite Seite (72) einer Vorderseite des Dichtungshohlraums (64) entsprechen.

9. Antriebsstranganordnung nach Anspruch 6, 7 oder 8, wobei die Abdeckung (65) der Dichtung über ein oder mehrere entfernbare Befestigungselemente an Ort und Stelle befestigt ist, wobei die Abdeckung (65) entfernbar und entlang der Welle (34) verschiebbar ist.

10. Antriebsstranganordnung nach den Ansprüchen 6, 7, 8 oder 9, wobei das Lager (54) mindestens eines aus einem Kegelrollenlager, einem Pendelrollenlager oder einem Zylinderrollenlager umfasst.

11. Antriebsstranganordnung nach den Ansprüchen 6, 7, 8, 9 oder 10, wobei das Lager (54) ein Hauptlager (54) einer Windturbine (10) umfasst und die Welle (34) eine Hauptwelle (34) der Windturbine (10) umfasst.

## Revendications

1. Procédé (100) pour remplacer un joint radial existant (62) positionné autour d'un arbre (34) et adjacent à un palier (54), le procédé (100) comprenant :
la fourniture d'une pluralité d'entretoises (66, 68) dans une cavité de joint (64) du joint radial existant (62) ;
le retrait d'un couvercle (65) du joint radial existant (62) ;
le retrait d'au moins l'une de la pluralité d'entretoises (66, 68) ;
le retrait du joint radial existant (62) d'autour de l'arbre (34) ;
le remplacement du joint radial existant (62) par un nouveau joint radial (62) ;
le déplacement d'au moins l'une de la pluralité des entretoises (66, 68) d'un premier côté (70) de la cavité de joint (64) vers un second côté opposé (72) de la cavité de joint (64) pour fournir un nouvel emplacement d'étanchéité pour le nouveau joint radial (62) et le fait de laisser les entretoises restantes (66, 68) de la pluralité d'entretoises (66, 68) sur le premier côté (70) ; et
la fixation du couvercle (65) à côté du nouveau joint radial (62).

2. Procédé (100) selon la revendication 1, dans lequel le premier côté (70) correspond à un côté arrière de la cavité de joint (64) et le second côté (72) correspond à un côté avant de la cavité de joint (64).

3. Procédé (100) selon l'une quelconque des revendications précédentes, dans lequel le retrait du couvercle (65) du joint radial existant (62) comprend en outre le retrait d'une ou plusieurs attaches fixant le couvercle (65) en place et le coulissement du couvercle (65) hors du joint radial existant (62).

4. Procédé (100) selon l'une quelconque des revendications précédentes, dans lequel le palier (54) comprend au moins l'un parmi un palier à rouleaux coniques, un palier à rouleaux sphériques ou un palier à rouleaux cylindriques.

5. Procédé (100) selon l'une quelconque des revendications précédentes, dans lequel le palier (54) comprend un palier principal (54) d'une éolienne (10) et l'arbre (34) comprend un arbre principal (34) de l'éolienne (10).

6. Ensemble train de transmission pour une éolienne (10), comprenant :
un arbre (34) ;
un palier (54) comprenant un chemin de roulement interne (56), un chemin de roulement externe (55) et une pluralité d'éléments à rouleaux (57) configurés entre eux ;
un joint radial existant (62) positionné autour de l'arbre (34) et adjacent au palier (54) à l'intérieur d'une cavité de joint (64) ;
un couvercle (65) adjacent au joint radial existant (62) qui fixe le joint radial existant (62) en place ; et
une pluralité d'entretoises (66, 68) dans la cavité de joint (64) adjacente au joint radial existant (62) pour fournir un emplacement d'étanchéité existant,
dans lequel une ou plusieurs entretoises de la pluralité d'entretoises (66, 68) peuvent être déplacés d'un premier côté (70) de la cavité de joint (64) à un côté opposé de la cavité de joint (64) et des entretoises restantes (66, 68) de la pluralité d'entretoises restent sur le premier côté (70) pour fournir un nouvel emplacement d'étanchéité pour un nouveau joint radial (62) lorsque le joint radial existant (62) est remplacé.

7. Ensemble train de transmission selon la revendication 6, dans lequel la pluralité d'entretoises (66, 68) sont empilées ensemble dans une direction axiale de l'arbre (34).

8. Ensemble de train de transmission selon la revendication 6 ou 7, dans lequel le premier côté (70) correspond à un côté arrière de la cavité de joint (64) et le second côté (72) correspond à un côté avant de la cavité de joint (64).

9. Ensemble train de transmission selon les revendications 6, 7 ou 8, dans lequel le couvercle (65) du joint est fixé en place via une ou plusieurs attaches amovibles, le couvercle (65) étant amovible et pouvant coulisser le long de l'arbre (34).

10. Ensemble train de transmission selon les revendications 6, 7, 8 ou 9, dans lequel le palier (54) comprend au moins l'un parmi un palier à rouleaux coniques, un palier à rouleaux sphériques ou un palier à rouleaux cylindriques.

11. Ensemble train de transmission selon les revendications 6, 7, 8, 9 ou 10, dans lequel le palier (54) comprend un palier principal (54) d'une éolienne (10) et l'arbre (34) comprend un arbre principal (34) de l'éolienne (10).
